# EUROPÄISCHE PATENTANMELDUNG

(11) **EP 2 332 450 A1**
(43) Veröffentlichungstag der Anmeldung: **15.06.2011**
(21) Anmeldenummer: 10190941.4
(22) Anmeldetag: 12.11.2010
(51) Int. Cl.: A47J 31/44

(54) **Einbaugetränkeautomat und Tropfschale**

(30) Priorität: 09.12.2009 DE 102009047752
(71) Anmelder: BSH Bosch und Siemens Hausgeräte GmbH, 81739 München (DE)
(72) Erfinder: Beck, Rudolf, 84579, Unterneukirchen (DE); Gerl, Bernhard, 83278, Traunstein (DE); Kramer, Siegmund, 83417, Kirchanschöring (DE); Schnaiter, Johann, 83233, Bernau (DE)

(57) **Zusammenfassung**

Die vorliegende Erfindung betrifft einen Einbaugetränkeautomaten, insbesondere einen Einbaukaffeevollautomaten, aufweisend eine Geräteeinheit mit einer entnehmbaren Tropfschale (1) und eine in einem Einbauhohlraum angeordnete Aufnahmeeinrichtung auf dem die Geräteeinheit während ihres bestimmungsgemäßen Betriebs befestigt ist, und mittels der die Geräteeinheit zusammen mit der Tropfschale (1) aus dem Einbauhohlraum ausfahrbar ist. Erfindungswesentlich ist dabei, dass ein Entleeren der entnehmbar ausgebildeten Tropfschale auch ohne Entnahme derselben mit einfachen und kostengünstigen Mitteln möglich ist.

## Beschreibung

Die Erfindung betrifft einen Einbaugetränkeautomaten, insbesondere einen Einbaukaffeevollautomaten, aufweisend eine Geräteeinheit mit einer entnehmbaren Tropfschale und eine in einem Einbauhohlraum angeordnete Aufnahmeeinrichtung auf dem die Geräteeinheit während ihres bestimmungsgemäßen Betriebs befestigt ist, und mittels der die Geräteeinheit zusammen mit der Tropfschale aus dem Einbauhohlraum ausfahrbar ist. Die Erfindung betrifft auch eine Tropfschale für einen solchen Einbaugetränkeautomaten, insbesondere einen solchen Einbaukaffeevollautomaten.

Stellvertretend für alle Arten von Einbaugetränkeautomaten werden im Folgenden Einbaukaffeevollautomaten beschrieben. Kaffeevollautomaten als Solo- wie auch als Einbauautomaten sind Geräte, die nach der Kaffeeauswahl alle Bedienschritte bis zur Entsorgung des Kaffeesatzes oder Tresters vollautomatisch durchführen. So werden nach dem Drücken einer Bezugstaste Kaffeebohnen vom Bohnenvorratsbehälter in ein unter dem Vorratsbehälter liegendes Mahlwerk transportiert, im Mahlwerk gemahlen und schließlich in eine Brühkammer verbracht. Dort wird das Kaffeepulver verpresst und mittels Heißwasser ausgelaugt. Anschließend wird der Trester in einen Tresterbehälter ausgeworfen.

Anfallendes Restwasser wird von einer Tropfschale aufgenommen, die in der Regel unterhalb der Geräteeinheit des Kaffeevollautomaten angeordnet und entnehmbar ausgebildet ist. Als Restwasser wird überschüssige, heiße, gegebenenfalls mit Zusatzstoffen beaufschlagte, Flüssigkeit bezeichnet, die nach jedem Kaffeebezug, nach dem Abdampfen, d.h. nach einem Umschalten zwischen Dampfbezug und Kaffeebezug, nach dem Einschalten des Vollautomaten um das Heizsystem zu fluten, und nach Entkalkungs- und/oder Reinigungsprogrammen anfällt. Das Restwasser wird aus dem Fluidsystem über einen Auslass einer Funktionseinheit, beispielsweise einer Entspannungskammer, in die Tropfschale abgegeben.

Der aus der EP 1 051 941 A2 bekannte Einbaukaffeevollautomat umfasst eine, ein Gehäuse aufweisende Geräteeinheit, die auf einer Aufnahmeeinrichtung befestigt und mit deren Hilfe aus einem Aufnahmehohlraum ausfahrbar ist, um beispielsweise Bohnen oder Wasser nachzufüllen oder Reparaturen vorzunehmen, und eine aus dem Gehäuse entnehmbare Tropfschale. Das Gehäuse umfasst außerdem eine Frontwand, die im Wesentlichen fluchtend mit der die Öffnung des Aufnahmehohlraums umgebenden Wandung des Küchenmöbels oder der Nische ausgerichtet ist.

Um Frischwasser und/oder Bohnen nachzufüllen, oder zur Einstellung beispielsweise des Mahlgrades, muss die Geräteeinheit in regelmäßigen Abständen aus dem Einbauhohlraum ausgefahren werden. Die Tropfschale, die in der Regel neben dem Trester auch eine beträchtliche Menge an Restwasser aufnimmt, wird zum Entleeren und Reinigen entnommen. Die Tropfschale kann dabei entweder zusammen mir der Geräteeinheit ausgefahren und schließlich entnommen werden, oder aber die Geräteeinheit verbleibt zusammen mit der Aufnahmeeinrichtung im Aufnahmehohlraum und nur die Tropfschale wird entnommen.

Aufgabe der Erfindung ist es, einen gattungsgemäßen Einbaukaffeevollautomaten derart weiterzubilden, dass ein Entleeren der Tropfschale auch ohne Entnahme derselben mit einfachen und kostengünstigen Mitteln realisiert wird. Diese Aufgabe wird mit den Merkmalen des unabhängigen Anspruchs 1 und denen des unabhängigen Anspruchs 5 gelöst. Vorteilhafte Ausführungsformen der Erfindung sind in den abhängigen Ansprüchen angegeben.

Die Erfindung baut auf einem gattungsgemäßen Einbaukaffeevollautomaten dadurch auf, dass über ein in der Tropfschale ausgebildetes Rückschlagventil Restwasser über ein Abwasserrohr entsorgbar ist.

Der Ventilteller des Rückschlagventils liegt bei ausgefahrener Geräteeinheit und/oder bei entnommener Tropfschale dichtend am Ventilsitz an. Im Betriebszustand, d.h. wenn Geräteeinheit und Tropfschale in dem Einbauhohlraum eingefahren sind, ist der Ventilteller vom Ventilsitz beabstandet, so dass Restwasser über ein Abwasserrohr entsorgt wird. Erreicht wird dies, indem das Ende des vorzugsweise feststehenden Abwasserrohres auf den federbelasteten Ventilteller des Rückschlagventils drückt. Wird die Tropfschale zusammen mit der Geräteeinheit ausgefahren, oder aber nur die Tropfschale entnommen, entspannt sich eine Feder und drückt den Ventilteller wieder dichtend gegen den Ventilsitz des in der Tropfschale ausgebildeten Rückschlagventils. Die vorliegende Erfindung ermöglicht ein Entleeren der Tropfschale auch ohne Entnahme derselben mit einfachen und kostengünstigen Mitteln; gleichzeitig bleibt die Tropfschale entnehmbar. Dies ist, insbesondere um den Tresterauffangbehälter zu entleeren und die Schale von Feststoffen und (organischen) Ölen und Ablagerungen zu reinigen, zwingend nötig. Durch die erfindungsgemäße Entkoppelung der Tropfschale von einem Abwasserrohr bleibt auch die Geräteeinheit zusammen mit der Tropfschale ausfahrbar. Auch dies ist ebenfalls zwingend nötig, da Verbrauchsstoffe, wie beispielsweise Kaffeebohnen nachgefüllt werden müssen.

Die Aufnahmeeinrichtung, auf der die Geräteeinheit zusammen mit der Tropfschale während ihres bestimmungsgemäßen Betriebs befestigt ist, und mittels der die Geräteeinheit aus dem Einbauhohlraum ausfahrbar ist, läuft nie auf einer exakten, vorbestimmten Bahn. Selbst Abweichungen um den Bruchteil eines Millimeters, beispielsweise durch Schwingungen des Küchenmöbels oder der Aufnahmeeinrichtung oder durch ein leicht ungenaues Positionieren der Geräteeinheit auf der Aufnahmeeinrichtung, können dazu führen, dass das Ende des vorzugsweise feststehenden (schwimmend gelagerten) Abwasserrohres nicht exakt auf den federbelasteten Ventilteller drückt, so dass eine dichte Verbindung nicht zustande kommt.

In einer vorteilhaften Ausführungsform der vorliegenden Erfindung weist die Außenseite der Tropfschale in Höhe des Rückschlagventils eine Art Trichtermündung auf, so dass beim Einfahren der Tropfschale oder beim Einfahren der Geräteeinheit zusammen mit der Tropfschale das Ende des Abwasserrohres zwangsgeführt wird, und schließlich exakt auf den Ventilteller drückt.

Da das System drucklos arbeitet, läßt sich in vorteilhafterweise ein elastischer Ring mit Dichtfunktion, beispielsweise ein konzentrisch um die Auslassöffnung ragendes Elastomer, um die Trichtermündung anbringen, so dass bereits vor dem Öffnen des Rückschlagventils eine dichte Verbindung zwischen Rohrende und Tropfschale besteht.

Um ein schwerkraftgetriebenes Ablaufen des Restwassers aus der Tropfschale über das Abwasserrohr in ein Abwassersystem eines Gebäudes zu gewährleisten, ist das Abwasserrohr zumindest im Bereich des Einbauhohlraumes leicht abfallend angeordnet. Ferner ist das Rohr bis zum Übergang in ein echtes Gefälle bevorzugt starr ausgeführt, da die Sedimentation von Trester- und Kaffeepulverresten einen Schlauch oder eine Leitung zusetzen können. Das Rückschlagventil ist bevorzugt an der tiefsten Stelle des Einbaukaffeevollautomaten positioniert.

In einer bevorzugten Ausführungsform der vorliegenden Erfindung ist ein Sieb in der Tropfschale vor dem Rückschlagventil angeordnet. Dadurch wird erreicht, dass Trester- und/oder Kaffeepulverreste in der Tropfschale zurückgehalten werden, und damit die Gefahr einer Verstopfung des Abwasserrohres vermieden wird. Besonders bevorzugt ist das Sieb entnehmbar.

Die Erfindung eignet sich für alle Arten von Einbaugetränkeautomaten, und insbesondere für Einbaukaffeevollautomaten. Da sich die erfindungsgemäße Lösung, auf die konstruktive Änderung der Tropfschale und deren Aufnahme in der Geräteeinheit beschränkt, ist weder die Geräteeinheit noch die Aufnahmeeinheit von Anpassungen oder Änderungen betroffen. Dadurch besteht die Möglichkeit, dem Endverbraucher eine Version des Einbaukaffeevollautomaten mit Abwasseranschluss und eine Version ohne Abwasseranschluss anzubieten. Ebenso kann ein Einbaukaffeevollautomat ohne Abwasseranschluss in einfacher Art und Weise nachgerüstet werden, indem der Endverbraucher eine erfindungsgemäße Tropfschale erwirbt.

Die erfindungsgemäße Tropfschale ist vorzugsweise aus einem kostengünstigeren Kunststoffmaterial, wie beispielsweise Polyprophylen (PP), oder aber, wenn optisch ansprechende Formen und Oberflächen insbesondere im sichtbaren Bereichs der Tropfschale gefordert werden, teilweise aus ABS (Acrylnitril-Buthadien-Styrol), gefertigt.

Insbesondere eignet sich die Erfindung für Einbaugetränkeautomaten mit einem Festwasseranschluss. Einer der großen Vorteile eines Festwasseranschlusses ist eine höhere geschmackliche Qualität des Getränks, insbesondere des Kaffees, da immer frisches Wasser verwendet werden kann. Dies erfordert jedoch häufiges Spülen des Fluidsystems. Daraus resultiert eine erhöhte Menge an Restwasser, die manuell nicht mehr entsorgt werden kann. Demnach können erst durch die erfindungsgemäße Entsorgung des Restwassers die großen Vorteile eines Festwasseranschlusses bezüglich geschmacklicher Qualität und Bedienkomfort richtig genutzt werden.

Ein Ausführungsbeispiel der Erfindung ist in den Zeichnungen rein schematisch dargestellt und wird nachfolgend näher beschrieben. Es zeigt:
- Fig. 1: eine geschnittene Seitenansicht einer Tropfschale mit Rückschlagventil vor dem Einfahren in den Einbauhohlraum,
- Fig. 2: eine geschnittene Seitenansicht einer Tropfschale mit Rückschlagventil im eingefahrenen Zustand, d.h. während des bestimmungsgemäßen Betriebs und
- Fig. 3: eine geschnittene Seitenansicht einer Tropfschale mit Rückschlagventil vor dem Einfahren in den Einbauhohlraum.

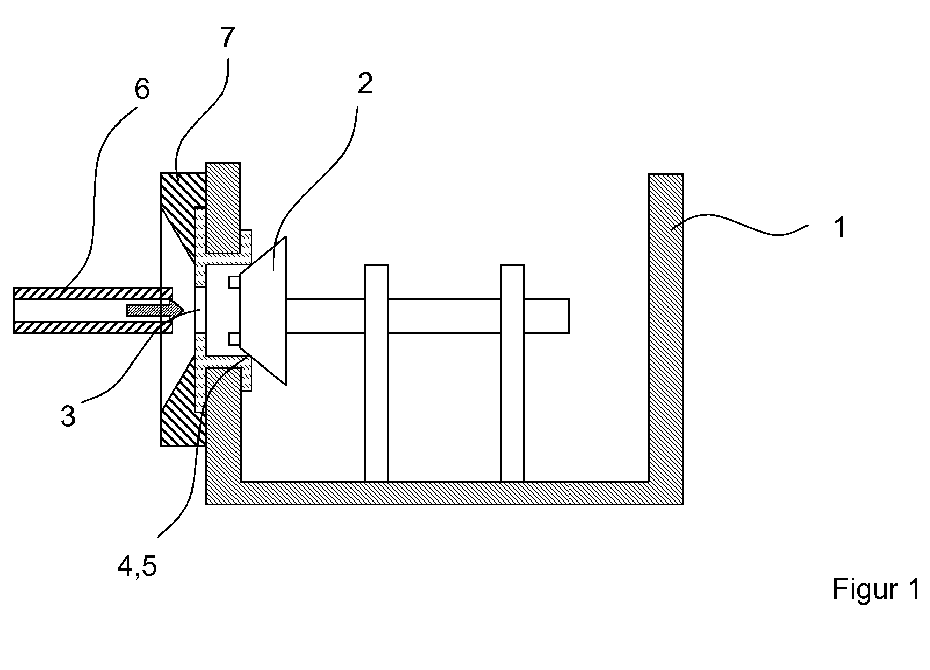

In den Figuren sind gleiche Teile mit den gleichen Bezugsziffern versehen. In Figur 1 befindet sich in einer mit 1 bezeichneten Tropfschale ein federbelasteter Ventilteller 2 vor einem Auslass 3 und einem Ventilsitz 4. Der Ventilteller 2 ist als Stößel ausgebildet; die Federbelastung ist nicht dargestellt.

Abweichend von diesem Ausführungsbeispiel ist es auch möglich, den Ventilteller 2 als eine federbelastete Klappe auszubilden, deren Drehpunkt beispielsweise über dem Auslass 3 angeordnet ist.

Der Ventilsitz 4 ist beispielsweise ein Elastomer 5. In der abgebildeten Ausführungsform ist der gesamte Auslass 3 mit dem Elastomer 5 umspritzt, wobei das Elastomer austrittsseitig konzentrisch in die Auslassöffnung ragt. Hierdurch läßt sich in einfacher Weise ein angekoppeltes Rohrende 6 gegenüber der Schaleninnenseite abdichten. Das Ende eines feststehenden Abwasserrohres 6 ragt in einen Aufnahmehohlraum eines Küchenmöbels. Das Rohr 6 ist idealerweise in Richtung des Abwassersystem des Gebäudes leicht abfallend angelegt. Da in der Regel Einbaukaffeevollautomaten immer höher als ein Küchenspülbecken angebracht werden, kann das Abwasserrohr an das Abwassersystem der Spüle angeschlossen werden.

Um Lagetoleranzen bei Einfahren auszugleichen weist die Tropfschale an der Außenseite im Bereich des Rückschlagventils eine Art Trichtermündung 7 auf. Dadurch läßt sich beim Einfahren der Tropfschale 1 bzw. der Geräteeinheit zusammen mit der Tropfschale 1 das Ende des feststehend gelagerten Abwasserrohres 6 in Richtung Ventilteller 2 zwangsführen.

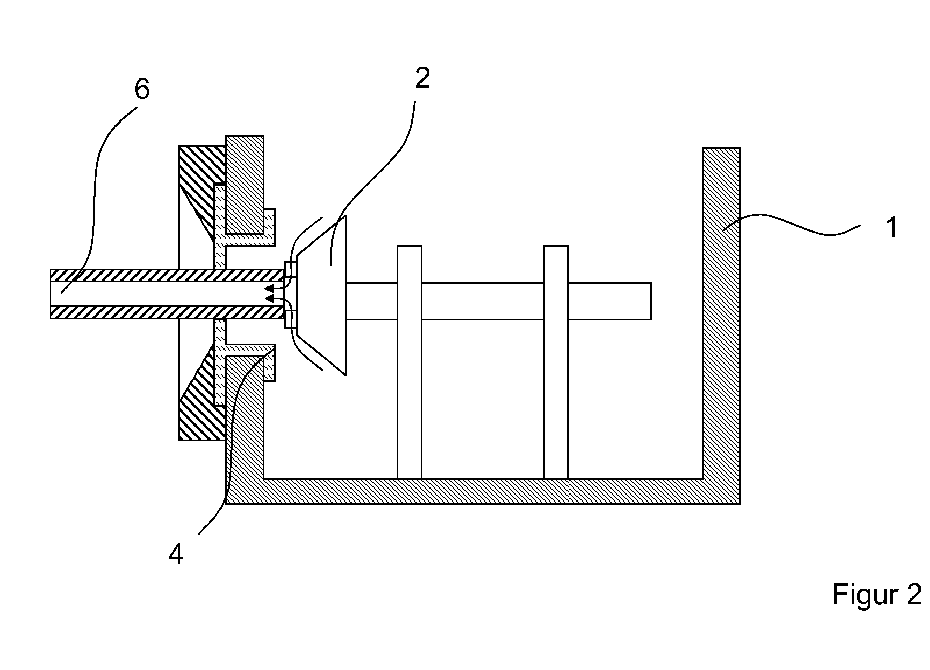

Figur 2 zeigt eine in einen Aufnahmehohlraum (nicht dargestellt) eingefahrene Tropfschale 1. Im Betriebszustand, d.h. wenn Geräteeinheit und Tropfschale in dem Einbauhohlraum eingeschoben bzw. eingefahren sind, sind Ventilteller 2 und Ventilsitz 4 voneinander beabstandet, so dass Restwasser über das Abwasserrohr 6 entsorgt werden kann. Das Ende des Abwasserrohres 6 drückt dabei auf den federbelasteten Ventilteller 2. Um Lagetoleranzen auszugleichen läßt sich der Ventilteller 2 mehr oder weniger weit in Richtung Schalenmitte zurückschieben. Wird die Geräteeinheit zusammen mit der Tropfschale 1 ausgefahren oder die Tropfschale 1 entnommen, entspannt sich die Feder und drückt den Ventilteller 2 wieder dichtend gegen den Ventilsitz 4.

Abweichend von diesem Ausführungsbeispiel ist es auch möglich, einen als Klappe ausgebildeten Ventilteller über das eingeschobene Abwasserrohr aufzudrücken, so dass Restwasser über das Abwasserrohr ablaufen kann.

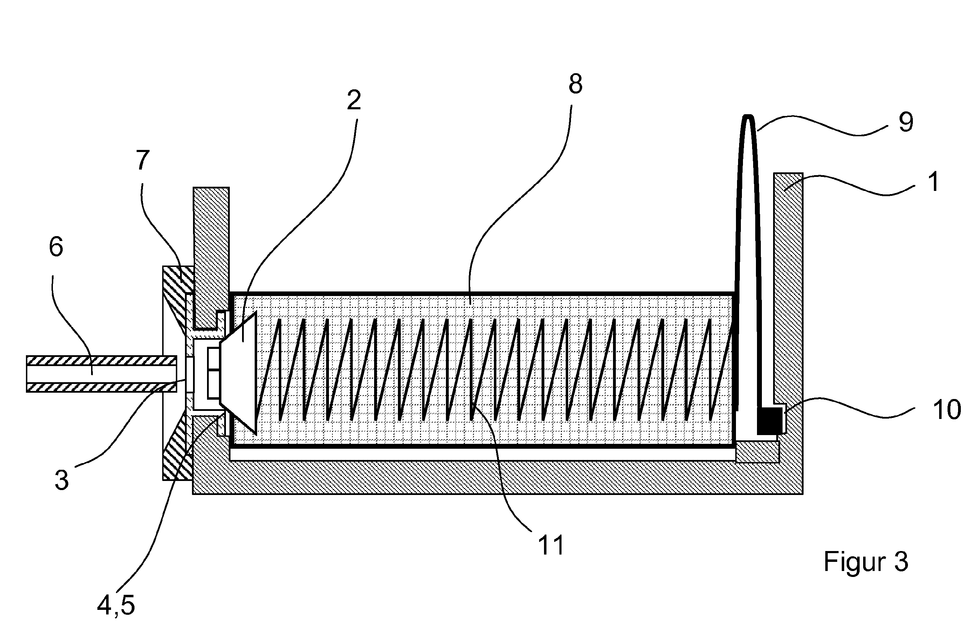

In Figur 3 befindet sich in einer mit 1 bezeichneten Tropfschale ein federbelasteter Ventilteller 2 in einem Siebkörper 8. Der Siebkörper 8 ist über einen Griff 9 federbelastet, über eine Rastnase 10 in der Tropfschale 1 verrastet und liegt dicht an der Innenseite der Tropfschale 1 vor dem Auslass 3 an. Zusammen mit dem Ventilteller 2, dem Auslass 3 und dem Ventilsitz 4 bildet der Siebkörper 8 eine bevorzugte Ausführungsform des erfindungsgemäßen Rückschlagventils.

Wird die Geräteeinheit zusammen mit der Tropfschale 1 eingefahren, oder eine entnommene Tropfschale 1 wieder eingeschoben, drückt das über die Trichtermündung 7 zwangsgeführte Abwasserrohr 6 zunächst gegen das konzentrisch in die Auslassöffnung ragende Elastomer 5, was bereits zu einer dichten Verbindung zwischen Rohr 6 und Tropfschale 1 führt, da das System drucklos betrieben wird. Dann drückt das Rohr 6 gegen den federbelasteten Ventilteller 2, was zu einer offenen Verbindung zwischen Abwasserrohr 6 und dem Inhalt der Tropfschale 1 führt. Lagetoleranzen beim Eingefahrenen Tropfschale 1 werden über die im Inneren des Siebkörpers 8 gelagerte Feder 11 ausgeglichen.

### Bezugszeichenliste

- 1: Tropfschale
- 2: Ventilteller
- 3: Auslass
- 4: Ventilsitz
- 5: Elastomer
- 6: Ende eines Abwasserrohres
- 7: Trichtermündung
- 8: Siebkörper
- 9: Griff
- 10: Rastnase
- 11: Feder

## Patentansprüche

1. Einbaugetränkeautomat, insbesondere Einbaukaffeevollautomat, aufweisend eine Geräteeinheit mit einer entnehmbaren Tropfschale und eine in einem Einbauhohlraum angeordnete Aufnahmeeinrichtung auf dem die Geräteeinheit während ihres bestimmungsgemäßen Betriebs befestigt ist, und mittels der die Geräteeinheit zusammen mit der Tropfschale aus dem Einbauhohlraum ausfahrbar ist, **gekennzeichnet durch** ein in der Tropfschale ausgebildetes Rückschlagventil dessen Ventilteller bei ausgefahrener Geräteeinheit oder entnommener Tropfschale dichtend am Ventilsitz anliegt.

2. Einbaugetränkeautomat nach Anspruch 1, **dadurch gekennzeichnet, dass**, der Ventilteller als federbelasteter Stößel oder als federbelastete Klappe ausgebildet.

3. Einbaugetränkeautomat nach Anspruch 1 oder 2, **dadurch gekennzeichnet, dass** der Ventilsitz Dichtmittel aufweist.

4. Einbaugetränkeautomat nach Anspruch 1, 2 oder 3, **gekennzeichnet durch** ein vor dem Ventilsitz angeordnetes Sieb oder **durch** einen vor dem Ventilsitz angeordneten Filter, um Kaffeepulverreste oder Trester zurückzuhalten.

5. Tropfschale für einen Einbaugetränkeautomat, insbesondere einen Einbaukaffeevollautomat, nach dem Oberbegriff von Patentanspruch 1, **gekennzeichnet durch** ein Rückschlagventil.

6. Tropfschale nach Anspruch 5, **gekennzeichnet durch** ein vor dem Ventilsitz angeordnetes Sieb oder **durch** einen vor dem Ventilsitz angeordneten Filter, um Kaffeepulverreste oder Trester zurückzuhalten.
